# EUROPÄISCHE PATENTSCHRIFT

(11) **EP 1 380 761 B1**
(45) Veröffentlichungstag und Bekanntmachung des Hinweises auf die Patenterteilung: **21.09.2005**
(21) Anmeldenummer: 03015160.9
(22) Anmeldetag: 04.07.2003
(51) Int. Cl.: F16B 21/07, F16B 37/04

(54) **Befestigungselement für eine Wandöffnung, insbesondere an einer Fahrzeugkarosserie**
Fastening element for a wall opening, in particular of a vehicle body
Elément de fixation pour une ouverture dans une paroi, en particulier d'une carrosserie de véhicule

(30) Priorität: 10.07.2002 DE 10231273
(43) Veröffentlichungstag der Anmeldung: 14.01.2004
(73) Patentinhaber: Newfrey LLC, Delaware 19711 (US)
(72) Erfinder: Schäty, Harald, 35578 Wetzlar (DE)
(74) Vertreter: Haar, Lucas Heinz Jörn

(56) Entgegenhaltungen:
- EP-A- 0 675 295
- US-A- 5 193 961
- US-A- 5 738 476

## Beschreibung

Die Erfindung betrifft ein Befestigungselement zum Einsetzen in eine rechteckige, insbesondere quadratische Öffnung in einer Wand, insbesondere an einer Fahrzeugkarosserie, mit einem Hals zum Durchgreifen der Öffnung, wobei die Querschnittskontur des Halses die Form eines Rechtecks, insbesondere eines Quadrats hat, einem an dem Hals angeordneten Flansch, der den die Öffnung umgebenden Randbereich der Wand überdeckt, wenn das Befestigungselement in der Öffnung angeordnet ist, einer durch den Flansch in den Hals ragenden Bohrung zur Aufnahme einer Schraube und mit wenigstens zwei federnden Rastnasen zum Festhalten des Befestigungselements in der Öffnung der Wand, wobei ausschließlich an zwei gegenüberliegenden Seiten des Halses Rastnasen vorgesehen sind, die jeweils in einen elastisch verformbaren Wandabschnitt des Halses integriert sind, wobei die elastisch verformbaren Wandabschnitte durch zwei steife Wandabschnitte verbunden sind, die keine Rastnasen tragen, und wobei die Wände, welche die Rastnasen tragen, durch sich in Längsrichtung erstreckende Aussparungen in äußere, federnde Wandabschnitte und innere Wandabschnitte unterteilt sind.

Bekannte Befestigungselemente sind mit dem Hals in der Öffnung der Wand gegen Verdrehen gesichert und können daher bei dem Eindrehen einer Befestigungsschraube in die Bohrung ein dem Eindrehmoment entgegenwirkendes Gegendrehmoment auf die Wand übertragen. Mit Hilfe der Rastnasen sind sie gegen Herausziehen aus der Öffnung gesichert. Um eine möglichst hohe axiale Haltekraft zu erreichen, sind bekannte Befestigungselemente der angegebenen Art an allen vier Seiten mit federnden Rastnasen versehen. Hierbei hat sich gezeigt, daß nur ein begrenzendes Gegendrehmoment für das Eindrehen von Schrauben erreicht werden kann. Treffen ungünstige Maßabweichungen von Schraube oder Bohrung aufeinander, so kann es zum Durchdrehen des Befestigungselementes und dadurch zur Beeinträchtigung des Montagevorganges kommen.

Aus der Druckschrift US-A-5,738,476 sind oben angegebene Befestigungselemente bekannt, welche zur Sicherung von Pressformen an der Fahrzeugkarosserie dienen. Weitere Befestigungselemente sind in den Druckschriften US-A-5, 193, 961 und EP-A-0 675 295 angegeben. Das in US-A-5,193, 961 beschriebene Befestigungselement weist keine sich in Längsrichtung erstreckende Aussparungen in den Wänden auf, durch die die Wand in äußere und innere Wandabschnitte unterteilt wird. Das Befestigungselement, das aus EP-A-0 675 295 bekannt ist, besteht aus einem Außenteil und einem Innenteil, so daß keine einstückige Wand ausgebildet wird. Diese Lösung ist sehr aufwendig. Die bekannten Befestigungselemente erreichen in der Halteposition nur eine unzureichende Haltekraft.

Der Erfindung liegt die Aufgabe zugrunde, ein Befestigungselement der eingangs angegebenen Art zu schaffen, welches bei ausreichender axialer Haltekraft ein möglichst hohes Drehmoment auf eine Wand übertragen kann. Ferner sollte eine zusätzliche Verriegelung der Rastnasen in der Halteposition erreicht werden.

Erfindungsgemäß wird die Aufgabe dadurch gelöst, daß die inneren Wandabschnitte sich in Längsrichtung der Bohrung erstreckende Federzungen bilden, die durch radiale Schlitze, die in die Aussparungen münden, seitlich freigestellt sind.

Es wurde gefunden, daß durch die erfindungsgemäße Gestaltung des Befestigungselements eine ausreichende Elastizität im Bereich der Rastnasen, eine ausreichende Haltekraft und ein torsionssteifer Hals geschaffen werden kann, der geeignet ist, vergleichsweise große Drehmomente auf die Wand zu übertragen. Ferner wird beim Eindrehen der Schraube in die Bohrung durch die Federzungen, welche sich an die Wandabschnitte anlegen, eine zusätzliche Verriegelung der Rastnasen in der Halteposition bewirkt. Das Befestigungselement eignet sich daher besonders für selbstschneidende und selbstsichernde Schrauben, die ein verhältnismäßig hohes Eindrehmoment benötigen.

Nach einem weiteren Vorschlag der Erfindung kann vorgesehen sein, daß der Flansch des Befestigungselementes quer zu seiner Erstreckung elastisch verformbar ist und daß die Haltemittel zum Festhalten des Befestigungselementes in der Öffnung der Wand so ausgebildet sind, daß die Einbaulage des Befestigungselementes nur durch elastische Verformung des mit seinem Umfangsrand an der Wand abgestützten Flansches erreichbar ist. Auf diese Weise bildet der Flansch ein federndes Element, welches bei der Montage des Befestigungselements gespannt wird und das Befestigungselement in axialer Richtung spielfrei hält. Zusätzlich wird mit einfachen Mitteln ein ausreichender Federweg zum Ausgleich von fertigungsbedingten Maßabweichungen erreicht.

Die Rastnasen haben vorzugsweise jeweils eine Einführschräge und eine Abstützfläche, wobei die Einführschrägen zum Zusammendrücken der Rastnasen beim Einsetzen in eine Wandöffnung dienen und die Abstützflächen geeignet sind, nach dem Entspannen der Rastnasen sich auf der dem Flansch abgekehrten Seite an der Wand abzustützen.

Nach einem weiteren Vorschlag der Erfindung kann das Befestigungselement einen den Hals auf der dem Flansch abgekehrten Seite verlängernden Schaft aufweisen, in den sich die Bohrung zur Aufnahme einer Schraube hinein erstreckt. Das freie Ende des Schaftes kann geschlossen sein, um einen dichten Verschluß der Öffnung zu ermöglichen.

Die Erfindung wird nachfolgend anhand eines Ausführungsbeispiels näher erläutert, das in der Zeichnung dargestellt ist. Es zeigen
- Figur 1: einen Schnitt I-I eines als Dübel ausgebildeten Befestigungselementes nach der Erfindung,
- Figur 2: einen Schnitt II-II des Befestigungselementes gemäß Figur 1,
- Figur 3: eine Ansicht des flanschseitigen Endes des Befestigungselementes gemäß Figur 1 und
- Figur 4: das Befestigungselement gemäß Figur 1 in Einbaulage.

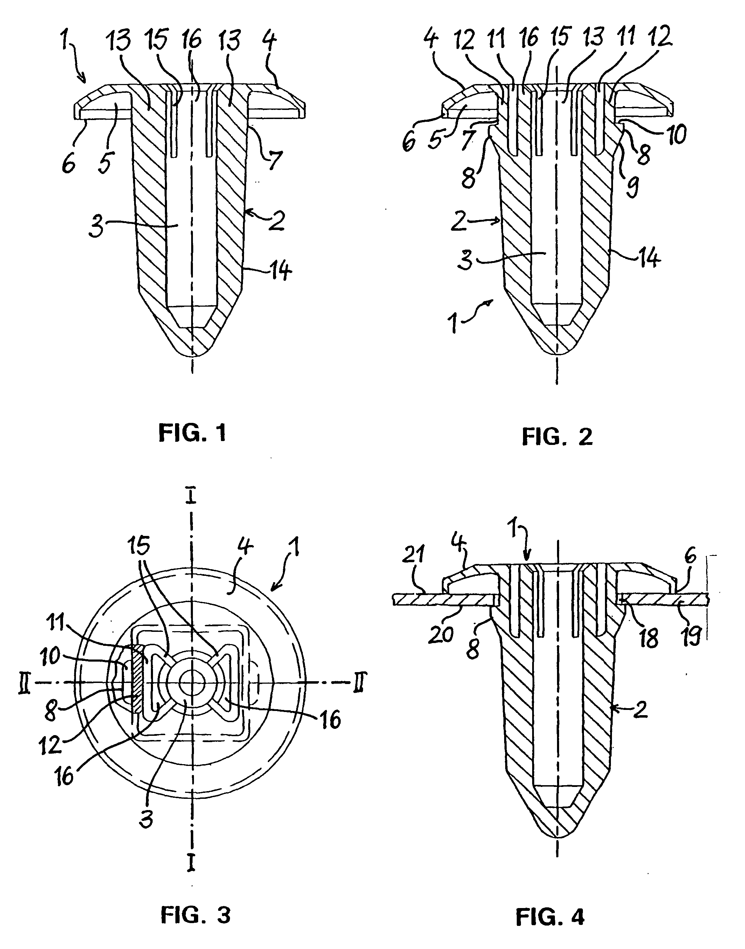

Bei dem in den Figuren 1 bis 3 dargestellten Befestigungselement 1 handelt es sich um einen Dübel aus Kunststoff, der zum Einsetzen in eine quadratische Öffnung in einer Wand aus Blech, z.B. an einer Fahrzeugkarosserie bestimmt ist, um mittels einer in den Dübel eingedrehten Schraube ein Anbauteil an der Wand befestigen zu können.

Das Befestigungselement 1 besteht aus einer langgestreckten Hülse 2 mit einer zentralen Bohrung 3, die an einem Ende verschlossen ist. An das offene Ende der Hülse 2 ist ein kreisrunder, koaxial zur Bohrung 3 angeordneter Flansch 4 angeformt, der an allen Seiten von der Hülse 2 absteht. Der Flansch 4 weist auf seiner der Hülse 2 zugekehrten Unterseite eine ringförmige Vertiefung 5 auf. Radial nach innen wird die Vertiefung 5 von der Außenfläche der Hülse 2 und radial nach außen von einem Umfangsrand 6 des Flansches 4 begrenzt.

Die Außenfläche der Hülse 2 hat im wesentlichen die Form einer Stufenpyramide mit quadratischer Grundfläche, wobei die Pyramidenspitze das geschlossene Hülsenende bildet. Der sich an den Flansch 4 anschließende Pyramidenfuß bildet einen Hals 7, der in der Einbaulage des Befestigungselementes 1 in die Wandöffnung eingreift. Durch seine vierkantige Form ist der Hals 7 in einer entsprechend gestalteten Öffnung gegen Verdrehen gesichert und in der Lage, ein dem Eindrehmoment einer in die Bohrung 3 eingedrehten Schraube entgegenwirkendes Gegendrehmoment auf die Wand zu übertragen.

Auf zwei entgegengesetzten Seiten weist der Hals 7 nach außen vorspringende Rastnasen 8 auf, die dem geschlossenen Hülsenende zugekehrte Einführschrägen 9 und dem Flansch 4 gegenüberliegende Abstützflächen 10 haben. Im Bereich der Rastnasen 8 ist die Hülsenwand durch sich parallel zur Bohrung 3 erstreckende Aussparungen 11 geschwächt. Hierdurch wird die elastische Verformbarkeit der die Rastnasen 8 tragenden Wandabschnitte 12 so weit erhöht, daß die Rastnasen 8 beim Einsetzen des Befestigungselementes 1 in eine Öffnung durch den Kontakt ihrer Einführschrägen 9 mit dem Öffnungsrand nach innen gedrückt werden können, um so die im Vergleich zum Abstand der Rastnasen 8 engere Wandöffnung zu passieren. Die Abstützflächen 10 der Rastnasen 8 sind zur Anlage an der dem Flansch 4 entgegengesetzten Seite der das Befestigungselement 1 aufnehmenden Wand bestimmt. Ihr Abstand von der Berührungsebene des Umfangsrandes 6 ist etwas kleiner als die Dicke der Wand, für die das Befestigungselement bestimmt ist. Wird das Befestigungselement 1 in die Öffnung der Wand eingesetzt, so muß daher durch axialen Druck auf die Hülse 2 der mit seinem Umfangsrand 6 an der Wand anliegende Flansch 4 elastisch verformt werden, damit die Rastnasen 8 auf der anderen Seite aus der Wandöffnung heraustreten und sich dort mit ihren Abstützflächen 10 an die Wand anlegen können.

Die Wandabschnitte 13 des Halses 7, die keine Rastnasen 8 tragen, sind steif ausgebildet. Sie ermöglichen dadurch die Aufnahme hoher Haltekräfte an einer in die Bohrung 3 eingedrehten Schraube und die Übertragung eines hohen Drehmoments auf die das Befestigungselement 1 aufnehmende Wand.

Der sich an den Hals 7 anschließende Abschnitt der Hülse 2 bildet einen Schaft 14, dessen Pyramidenspitze das Einführen des Befestigungselementes 2 in eine Öffnung erleichtert.

Die Aussparungen 11 sind an ihren seitlichen Enden durch radiale Schlitze 15 mit der Bohrung 3 verbunden. Hierdurch sind radial federnde Zungen 16 gebildet, die durch Eindrehen einer Schraube in die Bohrung 3 radial nach außen gedrückt werden und sich an die Wandabschnitte 12 anlegen.

Das Schraubengewinde schneidet nur in die Wandabschnitte 13 und die Wand des Schafts 14 ein. Die Zungen 16 füllen den Zwischenraum zwischen der Schraube und den Wandabschnitten 12 aus und stützen dadurch die Wandabschnitte 12 radial nach innen ab. Hierdurch werden die Rastnasen 8 in ihrer Halteposition verriegelt, so daß das in einer Wandöffnung montierte Befestigungselement 1 zusätzlich gegen Lösen gesichert ist.

Zum Abdichten einer das Befestigungselement 1 aufnehmenden Öffnung in einer Wand kann in der Vertiefung 5 des Flansches 4 ein Dichtring angeordnet werden, der bei der Montage des Befestigungselementes 1 zwischen dem Flansch 4 und der Wand eingespannt wird.

In Figur 4 ist die Einbaulage des Befestigungselementes 1 veranschaulicht. Das Befestigungselement 1 befindet sich hierbei in einer quadratischen Öffnung 18 in einer Wand 19. In dieser Lage wird es durch die Rastnasen 8 festgehalten, die mit ihren Abstützflächen 10 an der in Einsteckrichtung gesehen hinteren Wandfläche 20 anliegen. Der Flansch 4 wurde bei der Montage des Befestigungselementes 1 durch Druck auf die Hülse 2 entgegen der Einsteckrichtung elastisch verformt und stützt sich daher mit seinem Umfangsrand 6 mit einer der Verformungskraft entsprechenden Kraft an der vorderen Wandfläche 21 ab.

## Patentansprüche

1. Befestigungselement (1) zum Einsetzen in eine rechteckige Öffnung (18) in einer Wand (19), insbesondere an einer Fahrzeugkarosserie, mit einem Hals (7) zum Durchgreifen der Öffnung, wobei die Querschnittskontur des Halses die Form eines Rechtecks, insbesondere eines Quadrats hat, einem an dem Hals angeordneten Flansch (4), der den die Öffnung umgebenden Randbereich der Wand überdeckt, wenn das Befestigungselement in der Öffnung angeordnet ist, einer durch den Flansch in den Hals ragenden Bohrung (3) zur Aufnahme einer Schraube und mit wenigstens auf entgegengesetzten Seiten des Halses angeordneten, nach außen vorspringenden federnden Rastnasen (8) zum Festhalten des Befestigungselements in der Öffnung der Wand, wobei ausschließlich an zwei gegenüberliegenden Seiten des Halses (7) Rastnasen (8) vorgesehen sind, die jeweils in einen elastisch verformbaren Wandabschnitt (12) des Halses (7) integriert sind und wobei die elastisch verformbaren Wandabschnitte (12) durch zwei steife Wandabschnitte (13) verbunden sind, die keine Rastnasen tragen, wobei die Wände, welche die Rastnasen (8) tragen, durch sich in Längsrichtung erstreckende Aussparungen (11) in äußere, federnde Wandabschnitte (12) und innere Wandabschnitte unterteilt sind, **dadurch gekennzeichnet, daß** die inneren Wandabschnitte sich in Längsrichtung der Bohrung (3) erstreckende Federzungen (16) bilden, die durch radiale Schlitze (15), die in die Aussparungen (11) münden, seitlich freigestellt sind.

2. Befestigungselement nach Anspruch 1, **dadurch gekennzeichnet, daß** die federnden Rastnasen (8) jeweils eine Einführschräge (9) und eine Abstützfläche (10) haben, wobei die Einführschrägen (9) zum Zusammendrücken der Rastnasen (8) beim Einsetzen in eine Wandöffnung dienen und die Abstützflächen (10) geeignet sind, nach dem Zurückverformen der Rastnasen (8) sich auf der dem Flansch (4) abgekehrten Seite an der Wand abzustützen.

3. Befestigungselement nach einem der vorhergehenden Ansprüche, **dadurch gekennzeichnet, daß** der Flansch (4) quer zu seiner durch den Umfangsrand (6) gebildeten Anlagefläche elastisch verformbar ist.

4. Befestigungselement nach einem der vorhergehenden Ansprüche, **dadurch gekennzeichnet, daß** die Haltemittel zum Festhalten des Befestigungselementes (1) in der Öffnung (18) der Wand (19) so angeordnet sind, daß in der Einbaulage des Befestigungselementes (1) der mit seinem Umfangsrand (6) an der Wand (19) abgestützte Flansch (4) elastisch verformt ist.

5. Befestigungselement nach einem der vorhergehenden Ansprüche, **gekennzeichnet durch** einen den Hals (7) auf der dem Flansch (4) abgekehrten Seite verlängernden Schaft (14), in den sich die Bohrung (3) zur Aufnahme einer Schraube hinein erstreckt.

6. Befestigungselement nach Anspruch 5, **dadurch gekennzeichnet, daß** das freie Ende des Schaftes (14) geschlossen ist.

## Claims

1. Fastening element (1) for insertion in a rectangular opening (18) in a wall (19), in particular on a vehicle body, having a neck (7) to pass through the opening, the cross-sectional contour of the neck being in the shape of a rectangle, in particular a square, having a flange (4) arranged on the neck covering the marginal portion of the wall around the opening when the fastening element is arranged in the opening, having a bore (3) extending through the flange into the neck to accommodate a screw, and having outward-projecting spring catches (8) arranged at least on opposed sides of the neck to secure the fastening element in the opening of the wall, wherein exclusively on two opposed sides of the neck (7), catches (8) are provided, in each instance integrated in an elastically deformable wall segment (12) of the neck (7), and wherein the elastically deformable wall segments (12) are connected by two rigid wall segments (13) not bearing any catches, wherein the walls bearing the catches (8) are subdivided by recesses (11) extending in lengthwise direction into outer spring wall segments (12) and inner wall segments, **characterized in that** the inner wall segments form spring tongues (16) extending in lengthwise direction of the bore (3) and laterally relieved by radial slits (15) opening into the recesses (11).

2. Fastening element according to claim 1, **characterized in that** the spring catches (8) each have an entry incline (9) and a bearing surface (10), the entry incline (9) serving to compress the catches (8) upon insertion in a wall opening, and the bearing surfaces (10) being suitable, after retro-deformation of the catches (8), to bear against the wall on the side away from the flange (4).

3. Fastening element according to any of the preceding claims, **characterized in that** the flange (4) is elastically deformable transverse to its bearing surface formed by the circumferential edge (6).

4. Fastening element according to any of the preceding claims, **characterized in that** the retaining means for securing the fastening element (1) in the opening (18) of the wall (19) are so arranged that in installation position of the fastening element (1), the flange (4) bearing on the wall (19) by its circumferential edge (6) is elastically deformable.

5. Fastening element according to any of the preceding claims, **characterized by** a shank (14) prolonging the neck (7) on the side away from the flange (4), into which shank the bore (3) extends to accommodate a screw.

6. Fastening element according to claim 5, **characterized in that** the free end of the shank (14) is closed.

## Revendications

1. Elément de fixation (1) destiné à être inséré dans une ouverture rectangulaire (18) dans une paroi (19), en particulier au niveau d'une carrosserie de voiture, avec un collet (7) en vue d'intervenir à travers l'ouverture, le contour de la section transversale du collet ayant la forme d'un rectangle, en particulier d'un carré, avec une collerette (4) disposée sur le collet, qui recouvre la zone de bordure de la paroi entourant l'ouverture lorsque l'élément de fixation est disposé dans l'ouverture, avec un alésage (3) se dressant à travers la collerette dans le collet et destiné à recevoir une vis et avec au moins des ergots de blocage résilients (8) disposés sur des côtés opposés du collet et en saillie vers l'extérieur destinés au maintien de l'élément de fixation dans l'ouverture de la paroi, des ergots de blocage (8) étant prévus exclusivement au niveau de deux côtés opposés du collet (7), lesdits ergots de blocage étant intégrés à chaque fois dans une section de paroi (12) du collet (7) déformable élastiquement et les sections de paroi (12) déformables élastiquement étant reliées via deux sections de paroi rigides (13) qui ne portent aucun ergot de blocage, les parois qui portent les ergots de blocage (8) étant subdivisées en sections de paroi extérieures résilientes (12) et en sections de paroi intérieures via des évidements (11) s'étendant dans le sens de la longueur, **caractérisé en ce que** les sections de paroi intérieures forment des lames flexibles (16) s'étendant dans le sens de la longueur de l'alésage (3) qui sont libérées latéralement grâce à des fentes radiales (15) qui débouchent dans les évidements (11).

2. Elément de fixation selon la revendication 1, **caractérisé en ce que** les ergots de blocage résilients (8) disposent à chaque fois d'un chanfrein d'introduction (9) et d'une surface d'appui (10), lesdits chanfreins d'introduction (9) servant à la compression des ergots de blocage (8) lors de l'insertion dans une ouverture de paroi et lesdites surfaces d'appui (10) étant appropriées en vue de s'appuyer contre la paroi du côté écarté de la collerette (4) après le retour à l'état initial des ergots de blocage (8).

3. Elément de fixation selon l'une quelconque des revendications précédentes, **caractérisé en ce que** la collerette (4) est déformable élastiquement en travers de sa surface d'applique formée par la bordure périphérique (6).

4. Elément de fixation selon l'une quelconque des revendications précédentes, **caractérisé en ce que** les moyens de retenue destinés au maintien de l'élément de fixation (1) sont disposés dans l'ouverture (18) de la paroi (19) de telle manière que la collerette (4) appuyée contre la paroi (19) avec sa bordure périphérique (6) est déformée élastiquement dans la position de montage de l'élément de fixation (1).

5. Elément de fixation selon l'une quelconque des revendications précédentes, **caractérisé par** une queue (14) prolongeant le collet (7) du côté écarté de la collerette (4) à l'intérieur de laquelle s'étend l'alésage (3) destiné à recevoir une vis.

6. Elément de fixation selon la revendication 5, **caractérisé en ce que** l'extrémité libre de la queue (14) est fermée.
